# EUROPEAN PATENT APPLICATION

(11) **EP 1 739 969 A2**
(43) Date of publication of application: **03.01.2007**
(21) Application number: 06013353.5
(22) Date of filing: 28.06.2006
(51) Int. Cl.: H04N 7/24

(54) **Information processing device, information processing method, encrypting/decrypting device, encrypting/decrypting method and computer program**

(30) Priority: 29.06.2005 JP 2005189813
(71) Applicant: SONY CORPORATION, Tokyo (JP)
(72) Inventor: Saeki, Keiko, Shinagawa-ku Tokyo (JP); Soma, Shunichi, Shinagawa-ku Tokyo (JP); Tateno, Hisayuki, Shinagawa-ku Tokyo (JP); Shimada, Hirofumi, Shinagawa-ku Tokyo (JP)
(74) Representative: Müller - Hoffmann & Partner

(57) **Abstract**

An information processing system includes an information processing device and an encrypting/decrypting device. The information processing device includes a copy-control-information extracting unit sequentially extracting copy control information included in content data, a copy-control-information-change detecting unit detecting a change in the copy control information, a content data separating unit separating the content data and storing a plurality of content data files, and a license generating unit generating a license corresponding to each content data file. The encrypting/decrypting device includes a receiving unit receiving the content data including content data packets and control information packets, a copy-control-information selecting unit selecting one piece of copy control information in accordance with the degree of copy restriction, and a transmitting unit transmitting the content data packets and the selected copy control information to the information processing device.

## Description

### CROSS REFERENCES TO RELATED APPLICATIONS

The present invention contains subject matter related to Japanese Patent Application JP 2005-189813 filed in the Japanese Patent Office on June 29, 2005, the entire contents of which are incorporated herein by reference.

### BACKGROUND OF THE INVENTION

### 1. Field of the Invention

The present invention relates to information processing devices, information processing methods, encrypting/decrypting devices, encrypting/decrypting methods, and computer programs, and in particular, to an information processing device, an information processing method, an encrypting/decrypting device, an encrypting/decrypting method, and a computer program for appropriately managing content data including different types of copy control information.

### 2. Description of the Related Art

Due to improvement in performance of personal computers (PCs) in recent years, handling of music and video content on PCs has become popular. In addition, due to development of the Internet, music and video content have become distributed on a network. As a result, unauthorized copying of such digital content has become a problem. Accordingly, unauthorized copy prevention techniques and copyright protection techniques for music and video content have been developed.

For example, digital transmission content protection (DTCP), which is one of the copyright protection techniques, is a cryptoprotocol for protecting content data (see Digital Transmission Content Protection Specification Revision 1.4 (Informational Version), February 28, 2005, pp.39-70). In DTCP, transmission of content data including video and audio content, such as a television program, between devices is performed by encrypting content data using a common content key generated by the devices performing mutual authentication, thereby prohibiting unauthorized copying, extraction, and tampering of the content data. In device authentication and key exchange (AKE), which is an authentication protocol of DTCP, authentication referred to as, for example, "full authentication" or "restricted authentication" is performed, and key exchange is performed.

The above-described content data is separated into data packets of a fixed length, which are referred to as a transport stream (TS). Copy control information (CCI) is set in each of the data packets. Content data encrypted by a cryptoprotocol can be decrypted by a receiving device included in a PC and stored as one content data file in a storage device, such as a hard disk drive.

### SUMMARY OF THE INVENTION

In the case where different types of copy control information are set in different data packets included in content data, when the content data is treated as one data file, it is difficult to appropriately manage the content data in accordance with the different types of copy control information. In the case where one content data file includes different types of copy control information, copying of the content data involves analysis of the copy control information set in all the data packets, resulting in time-consuming processing.

The present invention has been made in view of the above-described circumstances and it is desirable to provide a novel and improved information processing device, an encrypting/decrypting device, an information processing method, and a computer program for appropriately managing content data according to the type of copy control information by storing the content data in separate pieces corresponding to the types of copy control information.

According to an embodiment of the present invention, there is provided an information processing system including an information processing device; and an encrypting/decrypting device for communicating with the information processing device and transmitting content data transmitted as a stream by an external device to the information processing device. The information processing device includes the following elements: copy-control-information extracting means for sequentially extracting pieces of copy control information included in the content data transmitted as the stream by the encrypting/decrypting device; copy-control-information-change detecting means for detecting a change in the sequentially extracted copy control information; content data separating means for separating, corresponding to the change in the copy control information, which is detected by the copy-control-information-change detecting means, the content data into a plurality of content data files and storing the content data files; and license generating means for generating, based on the copy control information, a license corresponding to each of the separated content data files. The encrypting/decrypting device includes the following elements: receiving means for receiving the content data including alternately arranged content data packets and control information packets corresponding to the content data packets, the content data packets and the control information packets being transmitted as the stream by the external device; copy-control-information selecting means for selecting one piece of copy control information in accordance with the degree of copy restriction of a plurality of types of copy control information included in the control information packets; and transmitting means for transmitting the content data packets and the copy control information selected by the copy-control-information selecting means as a stream to the information processing device.

According to another embodiment of the present invention, there is provided an information processing device for communicating with an encrypting/decrypting device that encrypts/decrypts content data transmitted as a stream by an external device. The information processing device includes the following elements: copy-control-information extracting means for sequentially extracting pieces of copy control information included in content data transmitted as a stream by the encrypting/decrypting device; copy-control-information-change detecting means for detecting a change in the sequentially extracted copy control information; content data separating means for separating, corresponding to the change in the copy control information, which is detected by the copy-control-information-change detecting means, the content data into a plurality of content data files and storing the content data files; and license generating means for generating, based on the copy control information, a license corresponding to each of the separated content data files.

According to the aforementioned information processing device, in the case where different types of types of copy control information are set in content data, the content data is separated and stored according to the type of copy control information, thereby enabling appropriate management of the content data according to the copy control information. By separating the content data into a plurality of content data files and generating a license corresponding to each of the content data files, the content data can be easily and efficiently moved or copied based on the copy control information included in the license, without analyzing the plurality of pieces of copy control information included in the content data.

The information processing device may further include authentication means for performing mutual authentication with the encrypting/decrypting device to generate a common content key; content key storage means for storing the content key; and decrypting means for decrypting the content data using the content key, the content data being encrypted using the content key and transmitted as the stream by the encrypting/decrypting device. By encrypting/decrypting the content data transmitted between devices using the content key generated by the authentication unit, the content data can be safely transmitted and received.

The copy-control-information-change detecting means may hold, among the pieces of copy control information sequentially extracted by the copy-control-information extracting means, one piece of copy control information as comparison base copy control information and compare newly extracted copy control information with the comparison base copy control information, thereby detecting a change in the copy control information. Accordingly, a point of change in the copy control information included in the content data can be extracted, and the content data can be separated corresponding to the change in the copy control information.

The content data transmitted as the stream may include content data packets and control information packets, which are alternately arranged. The copy-control-information extracting means may extract the copy control information included in the control information packets corresponding to the content data packets.

The content data separating means may separate, corresponding to the change detected by the copy-control-information-change detecting means, the content data into the content data files including content data packets and control information packets and store the content data files.

The encrypting/decrypting device may select, from a plurality of types of copy control information included in control information packets, the copy control information having the highest degree of copy restriction and transmit the copy control information to the information processing device. Accordingly, the information processing device can obtain, among the pieces of copy control information included in the content data, the copy control information having the highest degree of copy restriction and appropriately manage the content data.

The information processing device may further include license storage means for storing the license generated by the license generating means; and transmitting means for transmitting the copy control information included in the license stored in the license storage means and the content data file corresponding to the license. The encrypting/decrypting device may transmit content data generated by adding the copy control information included in the license to the content data file transmitted by the transmitting means included in the information processing device as a stream to the external device. Accordingly, without detecting the copy control information included in the content data, the copy control information set in the content data can be checked based on the copy control information included in the license. This reduces the processing time for moving or copying the content data.

According to another embodiment of the present invention, there is provided an information processing method including the steps of sequentially extracting pieces of copy control information included in content data transmitted as a stream by an encrypting/decrypting device; generating a license based on the extracted copy control information; detecting a change in the sequentially extracted copy control information; and separating, corresponding to the change in the copy control information, the content data and storing the separated content data in a content data file corresponding to the license.

According to another embodiment of the present invention, there is provided a computer program for allowing a computer to function as the above-described information processing device. The computer program allows the computer to function as the above-described information processing device when loaded into a storage device included in the computer and read and executed by a central processing unit (CPU) included in the computer. In addition, there is provided a computer-readable recording medium having recorded thereon the computer program. The recording medium includes, for example, a magnetic disk and an optical disk.

According to another embodiment of the present invention, there is provided an encrypting/decrypting device for transmitting content data transmitted as a stream by an external device to an information processing device. The encrypting/decrypting device includes the following elements: receiving means for receiving the content data including alternately arranged content data packets and control information packets corresponding to the content data packets, the content data packets and the control information packets being transmitted as the stream by the external device; copy-control-information selecting means for selecting one piece of copy control information in accordance with the degree of copy restriction of a plurality of types of copy control information included in the control information packets; and transmitting means for transmitting the content data packets and the copy control information selected by the copy-control-information selecting means as a stream to the information processing device.

According to the aforementioned encrypting/decrypting device, in the case where a plurality of types of copy control information is included in control information packets, one piece of copy control information can be selected and transmitted to an information processing device. For example, by selecting, from the plurality of types of copy control information, the copy control information having the highest degree of copy restriction, content data can be appropriately managed without violating the copy restriction.

The encrypting/decrypting device may further include decrypting means for decrypting the content data encrypted by the external device; authentication means for performing mutual authentication with the information processing device to generate a common content key; content key storage means for storing the content key; and encrypting means for encrypting, using the content key, the content data transmitted as the stream by the external device. Accordingly, the copy control information included in the content data can be encrypted and transmitted, thereby prohibiting tampering of the copy control information and appropriately managing the content data.

The copy-control-information selecting means may select, from the plurality of types of copy control information included in the control information packets, the copy control information having the highest degree of copy restriction.

The receiving means may receive, from the information processing device, a content data file including at least one content data packet and at least one control information packet and copy control information included in a license corresponding to the content data file. The transmitting means may transmit content data generated by adding the copy control information included in the license to the content data file corresponding to the license as a stream to the external device.

Accordingly, the copy control information set in the content data can be checked based on the copy control information included in the license, without detecting the copy control information included in the content data. This reduces the processing time for moving or copying the content data.

According to another embodiment of the present invention, there is provided an encrypting/decrypting method including the steps of receiving content data including alternately arranged content data packets and control information packets corresponding to the content data packets, the content data packets and the control information packets being transmitted as a stream by an external device; selecting one piece of copy control information in accordance with the degree of copy restriction of a plurality of types of copy control information included in the control information packets; and transmitting the content data packets and the selected copy control information as a stream to an information processing device.

According to another embodiment of the present invention, there is provided a computer program for allowing a computer to function as the above-described encrypting/decrypting device. The computer program allows the computer to function as the above-described encrypting/decrypting device when loaded into a storage device included in the computer and read and executed by a CPU included in the computer. In addition, there is provided a computer-readable recording medium having recorded thereon the computer program. The recording medium includes, for example, a magnetic disk and an optical disk.

As described above, according to these embodiments of the present invention, content data can be appropriately managed according to the type of copy control information by separating and storing the content data according to the type of copy control information.

### BRIEF DESCRIPTION OF THE DRAWINGS

Fig. 1 is an illustration of the outline according to an embodiment of the present invention;
Fig. 2 is a diagram of a content data transmitting method according to the embodiment;
Fig. 3 is a bock diagram showing the functional configuration of an encrypting/decrypting device according to the embodiment;
Fig. 4 is a bock diagram showing the functional configuration of an information processing device according to the embodiment;
Fig. 5 is a diagram of control information packets and content data packets according to the embodiment;
Fig. 6 is a diagram of a content data file and a license according to the embodiment;
Fig. 7 is a diagram of a specific example of the license according to the embodiment;
Fig. 8 is a diagram of a specific example of an avout parameter included in the license according to the embodiment;
Fig. 9 is a diagram of specific examples of CCI according to the embodiment;
Fig. 10 is a flowchart showing a process of detecting a change in copy control information according to the embodiment;
Fig. 11 is a flowchart showing a process of transmitting content data from the encrypting/decrypting device to the information processing device according to the embodiment;
Fig. 12 is a flowchart showing a process of transmitting content data from the information processing device to the encrypting/decrypting device according to the embodiment; and
Fig. 13 is a diagram of a content data transmitting method according to a modification of the present invention.

### DESCRIPTION OF THE PREFERRED EMBODIMENTS

Preferred embodiments of the present invention will be described in detail with reference to the accompanying drawings. In this specification and the drawings, parts having substantially the same functions are designated by the same reference numerals, and repeated descriptions thereof will be omitted.

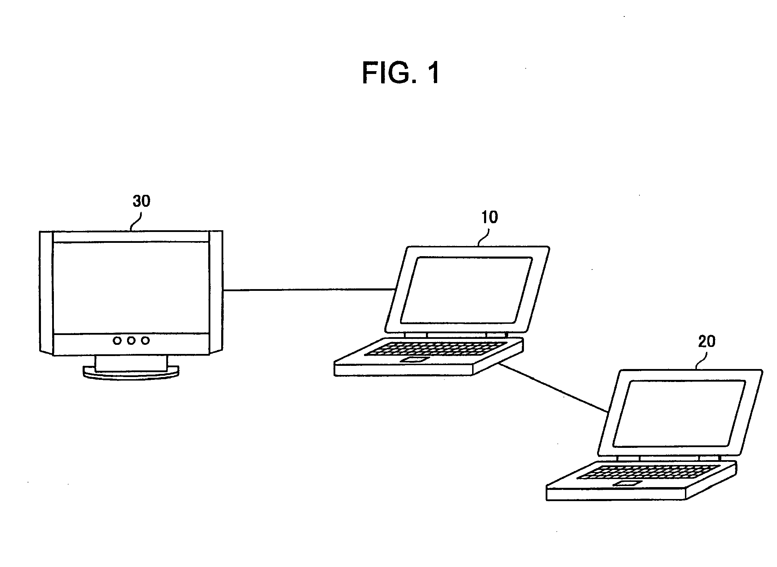

With reference to Fig. 1, an embodiment of the present invention will be outlined. The present invention will be described below by way of an embodiment applied to a PC 10, which is an information processing system capable of separating content data transmitted as a stream by an external device 30 into pieces according to the type of copy control information and storing the separated pieces of content data.

The external device 30 has a function of receiving broadcast waves of television broadcasting or the like and converting the received radio waves into a content stream encoded in the Motion Picture Experts Group (MPEG) 2 format. The broadcast waves of television broadcasting or the like include, for example, terrestrial digital broadcasting, communication satellite (CS) digital broadcasting, and broadcast satellite (BS) digital broadcasting. The external device 30 transmits the MPEG2-encoded content data in a format referred to as a TS to the PC 10.

The content data is embedded with copy control information. In accordance with the copy control information, the PC 10 can store the content data and transfer the stored content data to another PC 20.

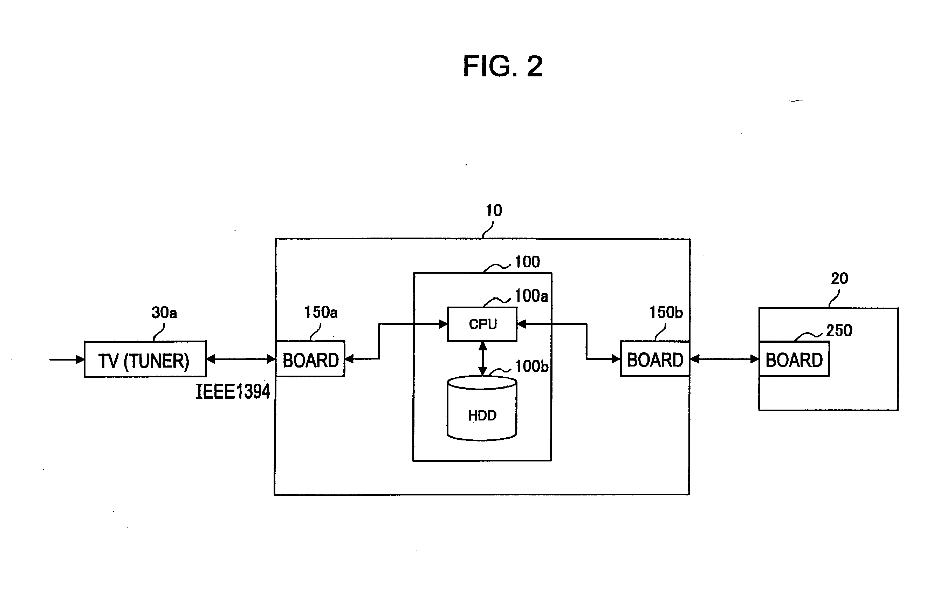

In the embodiment, content data is protected by a cryptoprotocol that prohibits unauthorized copying, extraction, and tampering of a content stream during transmission of the content data between devices. A protocol that prohibits unauthorized copying of a content stream may be exemplified by, for example, DTCP. Referring now to Fig. 2, a method for transmitting content data between devices is described.

Fig. 2 is a diagram of a content data transmitting method according to the embodiment. As shown in Fig. 2, radio waves of television broadcasting or the like received by a TV tuner 30a of the external device 30 are encoded in the MPEG2 format and transmitted to the PC 10. The content data encoded by the external device 30 in the MPEG2 format is separated into data packets of a fixed length, which are referred to as a TS, and transmitted as a stream to the PC 10 via a connection interface, such as the Institute of Electrical and Electronics Engineers (IEEE) 1394 interface.

The PC 10 stores the transmitted stream of data packets in a hard disk drive (HDD) 100b and transmits the stored data packets in a stream to the other PC 20. As shown in Fig. 2, the PC 10 includes a board 150a, a board 150b, and an information processing device 100. The board 150a transmits the stream of content data transmitted from the TV tuner 30a to a CPU 100a.

The content data transmitted from the TV tuner 30a to the board 150a is protected by a cryptoprotocol, such as DTCP. Specifically, the TV tuner 30a and the board 150a encrypt the content data using a common content key generated by performing mutual authentication using the DTCP authentication protocol, thereby prohibiting unauthorized copying, extraction, and tampering of the content data. The board 150a decrypts the content data encrypted and transmitted by the TV tuner 30a.

In order to protect the decrypted content data, the board 150a encrypts the content data using a content key generated by performing mutual authentication with the CPU 100a and transmits the encrypted content data to the CPU 100a. The CPU 100a decrypts the content data transmitted from the board 150a and stores the content data in the HDD 100b. The content data stored in the HDD 100b may be further transferred via the board 150b to the other PC 20.

The PC 20 is a household terminal connected to the PC 10. During the transfer of the content data from the board 150b of the PC 10 to a board 250 of the PC 20, the content data is protected by a cryptoprotocol, such as DTCP.

In the embodiment, as described above, the content data can be protected during transmission thereof between devices. In addition, in order to restrict the copying of the content data, copy control information (CCI) is set in the content data. The content data transmitted from the TV tuner 30a is separated into data packets of a fixed length, which are referred to as a TS, and the data packets are transmitted as a stream, in units of packets, to the PC 10. The copy control information for controlling the copying of the content data is set in each of the data packets.

Methods for transmitting the copy control information using DTCP include embedded CCI, which is embedded in the content data and which can be distinguished by decrypting the content data, and an encryption mode indicator (EMI), which is added to the header of a data packet and which allows the copy control information to be distinguished without decrypting the content data. A method for encoding and transmitting the copy control information in a TS includes, for example, a DTCP_descriptor defined by the Digital Transmission Licensing Administrator (DTLA).

As described above, the content data transmitted as a stream to the PC 10 can be stored as a content data file in the HDD 100b. For example, in the case where different types of copy control information are set in different data packets of the content data, when the content data is stored in one content data file in the HDD 100b, the different types of copy control information are mixed in the content data file. As a result, it becomes difficult to appropriately manage the content data in accordance with the copy control information. In the embodiment, the content data is separated into pieces according to the type of copy control information, and the separated pieces of content data are stored according to the type of copy control information, thereby enabling appropriate management of the content data according to the type of copy control information.

The information processing device 100 has a function of generating a license corresponding to the content data based on the copy control information. In the embodiment, the content data is separated into pieces according to the type of copy control information, and a license corresponding to each separate content data file is generated, thereby enabling appropriate management of the content data in accordance with the copy control information.

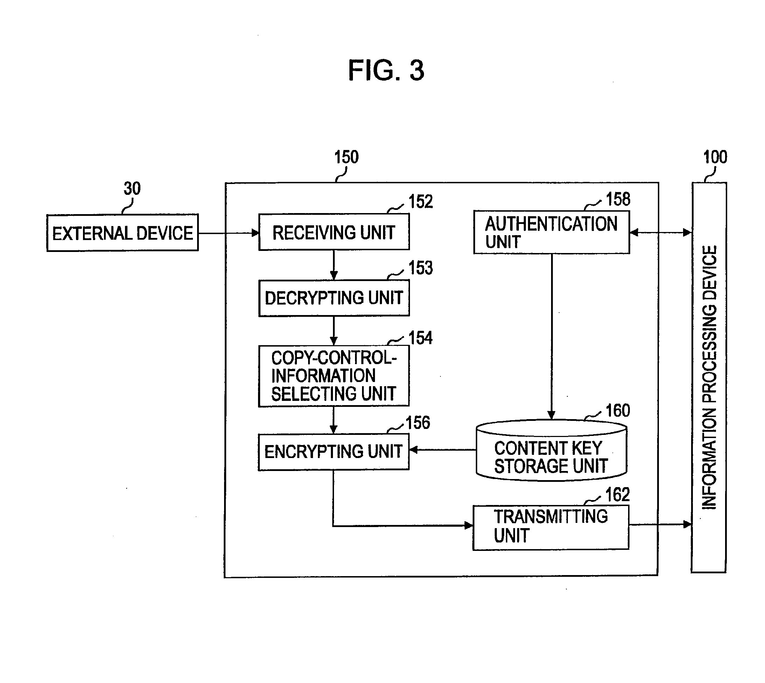

The content data transmitting method according to the embodiment has now been described. Referring now to Fig. 3, the functional configuration of an encrypting/decrypting device 150 provided on the board 150a in Fig. 2 will be described. The encrypting/decrypting device 150 may be provided on the board 150b or the board 250 in Fig. 2. As shown in Fig. 3, the encrypting/decrypting device 150 includes a receiving unit 152, a decrypting unit 153, a copy-control-information selecting unit 154, an encrypting unit 156, an authentication unit 158, a content key storage unit 160, and a transmitting unit 162.

The receiving unit 152 is a communication interface including, for example, a communication line, a communication circuit, or a communication device and has a function of receiving content data encrypted and transmitted as a stream by the external device 30. The content data transmitted from the external device 30 is separated into data packets of a fixed length, which are referred to as a TS, and transmitted as a stream to the receiving unit 152. The receiving unit 152 supplies the received content data to the decrypting unit 153.

The decrypting unit 153 has a function of decrypting the TS packets of a fixed length, which are supplied by the receiving unit 152. The content data decrypted by the decrypting unit 153 is supplied to the copy-control-information selecting unit 154. Each of the TS packets decrypted by the decrypting unit 153 includes a TS header (4 bytes) and a data portion (184 bytes). Basically, each TS packet has a length of 188 bytes. A time stamp having a length of at least 4 bytes is added to each TS packet by the decrypting unit 153, which results in a TS packet having a total length of 192 bytes. The TS header is added to each data packet and includes data such as a sync_byte indicating the beginning of the TS packet and a packet identifier (PID). The data portion stores content data including video signals and audio signals encoded in the MPEG2 format and control information for the content data. In the embodiment, a TS packet including content data is referred to as a "content data packet", and a TS packet including control information is referred to as a "control information packet". Hereinafter, the content data packet and the control information packet may collectively be referred to as a "data packet".

The control information included in the control information packets is, for example, a program map table (PMT), which is a table indicating the configuration of programs (the types of data including video, audio, and text data) included in the content data packets, and is transmitted from an external device at approximately intervals of 0.5 seconds. The PMT designates the PID and stream_type of a program included in the content data packets. In addition, various parameters are set in the PMT in the descriptor format.

In the case where the TS packets are transmitted using DTCP, a DTCP_descriptor including the copy control information for the content data is set in the PMT. In DTCP, CCI or copy control information is set to one of the following: "copy free (copying is allowed)"; "copy-one-generation (copying is allowed only for one generation)"; "no-more-copies (copying is not allowed beyond this generation)"; and "copy-never (copying is prohibited)". Among these conditions to restrict copying, "copy-free" is the least restricting. The degree of copy restriction becomes greater in the order of "copy-one-generation", "no-more-copies", and "copy-never". When the content data of "copy-one-generation" is stored in the HDD or the like, the condition is updated to "no-more-copies".

The copy control information in the PMT is set according to each program. That is, different types of copy control information may be set for different programs. For example, the content data packets may include video content set to "copy free" and audio content set to "copy-one-generation". In such a case, when CCI is stored in a DTCP_descriptor, there is a plurality of DTCP_descriptors storing CCI according to each program.

The copy-control-information selecting unit 154 has a function of selecting one piece of copy control information in accordance with the degree of copy restriction of a plurality of types of copy control information included in the control information packets. For example, when different types of copy control information are set for different programs, the copy control information having the highest degree of copy restriction may be selected. As described above, in the case of a plurality of DTCP_descriptors including CCI according to each program, the DTCP_descriptor including CCI of the highest degree of copy restriction is selected from among the plurality of DTCP_descriptors. By selecting the copy control information having the highest degree of copy restriction, the content data packets can be appropriately controlled using one piece of copy control information without violating the copy restriction.

The authentication unit 158 has a function of generating a common content key by performing mutual authentication with the information processing device 100. The authentication unit 158 performs mutual authentication by, for example, transmitting/receiving a random number to/from the information processing device 100 and generates an authentication key based on the authentication. This authentication key may serve as a common content key for use in transmission of the data packets. The content key generated by the authentication unit 158 is stored in the content key storage unit 160.

The encrypting unit 156 encrypts the data packets using the content key, which is stored in the content key storage unit 160 and which is shared with the information processing device 100. The encrypting unit 156 supplies the encrypted data packets to the transmitting unit 162.

The transmitting unit 162 is a communication interface including, for example, a communication line, a communication circuit, or a communication device, and has a function of transmitting the data packets encrypted by the encrypting unit 156 to the information processing device 100.

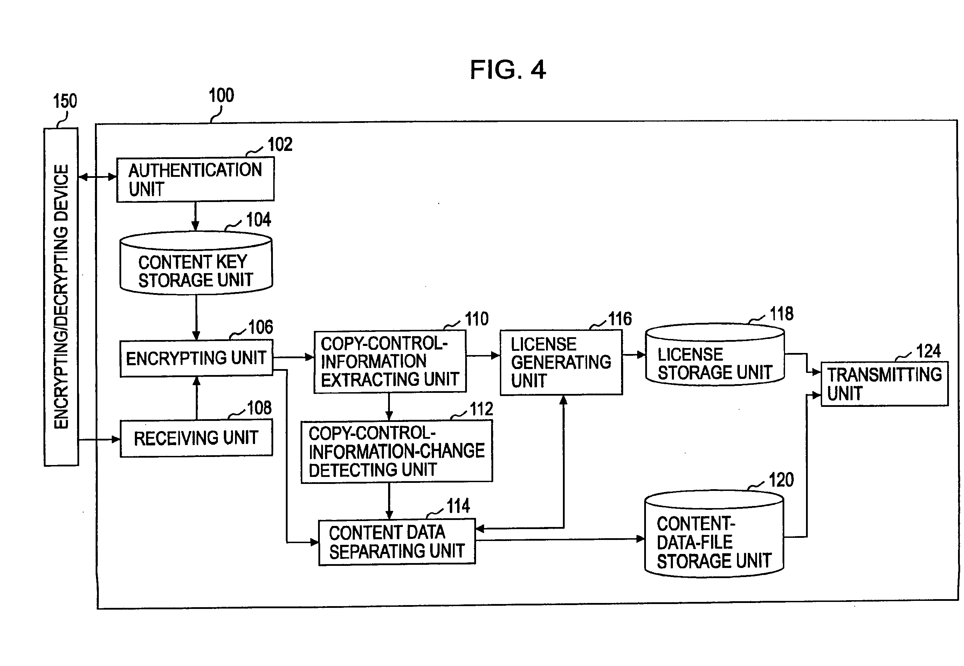

The functional configuration of the encrypting/decrypting device 150 has now been described. Referring now to Fig. 4, the functional configuration of the information processing device 100 will be described.

As shown in Fig. 4, the information processing device 100 includes an authentication unit 102, a content key storage unit 104, a decrypting unit 106, a receiving unit 108, a copy-control-information extracting unit 110, a copy-control-information-change detecting unit 112, a content data separating unit 114, a license generating unit 116, a license storage unit 118, a content-data-file storage unit 120, and a transmitting unit 124.

The authentication unit 102 has a function of generating a common content key by performing mutual authentication with the encrypting/decrypting device 150. The authentication unit 102 performs mutual authentication by, for example, transmitting/receiving a random number to/from the encrypting/decrypting device 150 and generates an authentication key based on the authentication. This authentication key may serve as a common content key for use in decryption of the received data packets. The content key generated by the authentication unit 102 is stored in the content key storage unit 104.

The receiving unit 108 is a communication interface including, for example, a communication line, a communication circuit, or a communication device and has a function of receiving content data encrypted using the common content key and transmitted as a stream by the encrypting/decrypting device 150. As described above, the data packets transmitted as a stream from the encrypting/decrypting device 150 correspond to the content data packets including the content data of video signals and audio signals encoded in the MPEG2 format and the control information packets including PMT. The receiving unit 108 supplies the received data packets to the decrypting unit 106.

The decrypting unit 106 has a function of decrypting the data packets supplied by the receiving unit 108 using the content key stored in the content key storage unit 104. The decrypting unit 106 supplies the decrypted data packets to the copy-control-information extracting unit 110 and the content data separating unit 114. Alternatively, the decrypting unit 106 may supply only the control information packets including PMT to the copy-control-information extracting unit 110 and may supply all the decrypted data packets to the content data separating unit 114.

The copy-control-information extracting unit 110 has a function of sequentially extracting pieces of the copy control information included in the content data supplied by the decrypting unit 106. Specifically, the copy-control-information extracting unit 110 extracts the copy control information from PMT in the control information packets. As described above, in the case where CCI or copy control information is set in the DTCP_descriptors, the CCI set in the DTCP_descriptors is extracted. The copy-control-information extracting unit 110 supplies the extracted copy control information to the license generating unit 116 and the copy-control-information-change detecting unit 112.

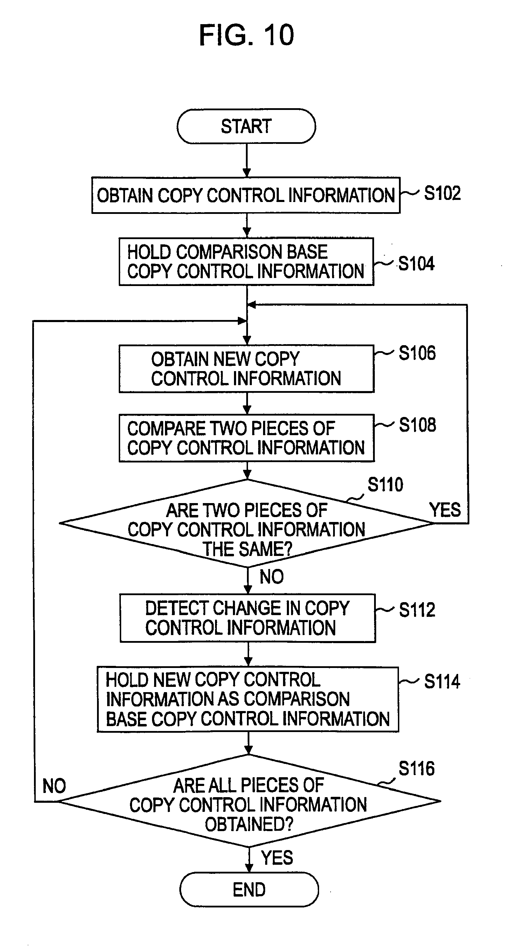

The copy-control-information-change detecting unit 112 has a function of detecting a change in the copy control information supplied by the copy-control-information extracting unit 110. Specifically, the copy-control-information-change detecting unit 112 holds, among the pieces of copy control information extracted and sequentially supplied by the copy-control-information extracting unit 110, one piece of copy control information as comparison base copy control information and compares newly extracted copy control information with the comparison base copy control information, thereby detecting a change in the copy control information. Referring to Fig. 10, a process of detecting a change in the copy control information, which is executed by the copy-control-information-change detecting unit 112, will be described.

As shown in Fig. 10, the copy-control-information-change detecting unit 112 obtains the copy control information supplied by the copy-control-information extracting unit 110 (S102). The copy-control-information-change detecting unit 112 holds the copy control information obtained in step S102 as comparison base copy control information (S104). The copy-control-information-change detecting unit 112 obtains newly extracted copy control information (S106). The copy-control-information-change detecting unit 112 compares the comparison base copy control information held in step S104 with the copy control information obtained in step S106 (S108). As a result of the comparison in step S108, the copy-control-information-change detecting unit 112 determines whether the comparison base copy control information and the newly obtained copy control information are of the same type (S110).

When it is determined in step S110 that the comparison base copy control information and the newly obtained copy control information are of different types, the copy-control-information-change detecting unit 112 detects a change in the copy control information and informs the content data separating unit 114 of the change (S112). When it is determined in step S110 that the two pieces of copy control information are of the same type, the copy-control-information-change detecting unit 112 returns to step S106 and further obtains new copy control information (S106).

After informing the content data separating unit 114 of the change in the copy control information in step S112, the copy-control-information-change detecting unit 112 holds the newly obtained copy control information as comparison base copy control information. The copy-control-information-change detecting unit 112 repeats the processing in steps S106 to S114 until the copy-control-information-change detecting unit 112 obtains all the pieces of copy control information supplied by the copy-control-information extracting unit 110. When it is determined in step S116 that all the pieces of copy control information are obtained, the process is completed.

The method of detecting a change in copy control information, which is executed by the copy-control-information-change detecting unit 112, has now been described. Referring back to Fig. 4, the content data separating unit 114, which is informed by the copy-control-information-change detecting unit 112 of the fact that the change in the copy control information is detected, separates the content data including a plurality of data packets supplied by the decrypting unit 106, corresponding to the change in the copy control information, and stores the separated pieces of content data in a content data file in the content-data-file storage unit 120. The content data file stored in the content-data-file storage unit 120 will be described later.

Appropriate management of the content data in accordance with the copy control information is enabled by separating, by the content data separating unit 114, the content data according to the type of copy control information and storing the separated pieces of content data in one content data file. For example, when moving or copying the content data stored in the content-data-file storage unit 120 to another storage device, it becomes possible to appropriately move or copy the content data in units of content data files.

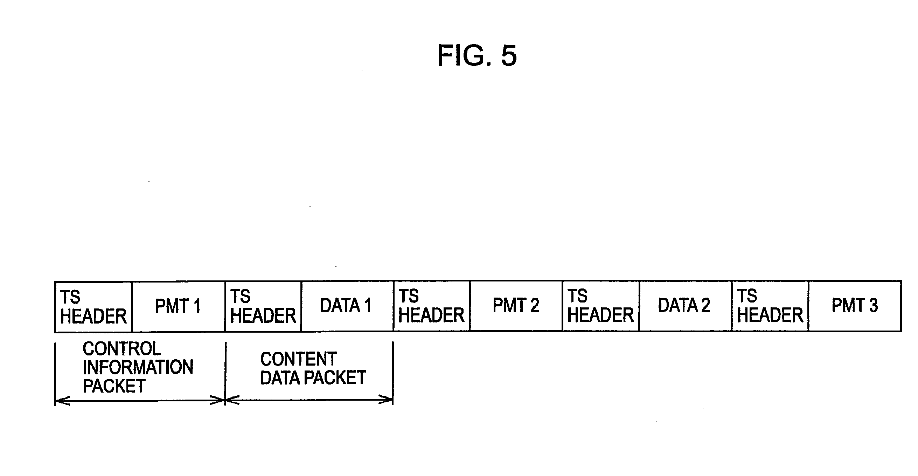

Referring to Fig. 5, content data including control information packets and content data packets, which are alternately arranged, is supplied by the decrypting unit 106. For example, in the case where CCI included in PMT1 indicates "copy free", CCI included in PMT2 indicates "copy-free", and CCI included in PMT3 indicates "copy-one-generation", the copy-control-information-change detecting unit 112 obtains PMT3 including the copy control information different from that in PMT2 and detects a change in the copy control information. The content data separating unit 114 stores the control information packets and the content data packets obtained prior to the control information packet including PMT3 in a content data file in the content-data-file storage unit 120.

Referring back to Fig. 4, the license generating unit 116 has a function of generating, based on the copy control information supplied by the copy-control-information extracting unit 110, a license corresponding to the content data file separated by the content data separating unit 114. In the license generated by the license generating unit 116, usage rules such as copy control information and playback control information for the content data included in the content data file stored in the content-data-file storage unit 120 are written.

In the case where the content data is separated by the content data separating unit 114 and a plurality of content data files are created, a license corresponding to each of the content data files is generated. In this case, the content data file may be associated with the corresponding license by an identical content ID.

The content ID may be supplied to the content data separating unit 114 by the license generating unit 116 by generating a license and adding a content ID thereto. That is, the license generating unit 116 may sequentially generate licenses based on the copy control information obtained after the content data has been separated by the content data separating unit 114 and may supply the content IDs added to these licenses to the content data separating unit 114. The content data separating unit 114 adds the content ID supplied by the license generating unit 116 to the separated content data file and stores the content data file with the content ID in the content-data-file storage unit 120.

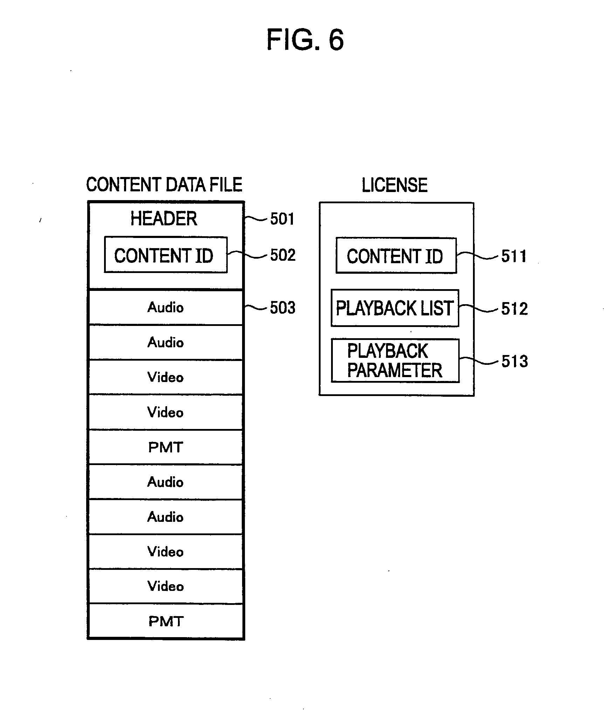

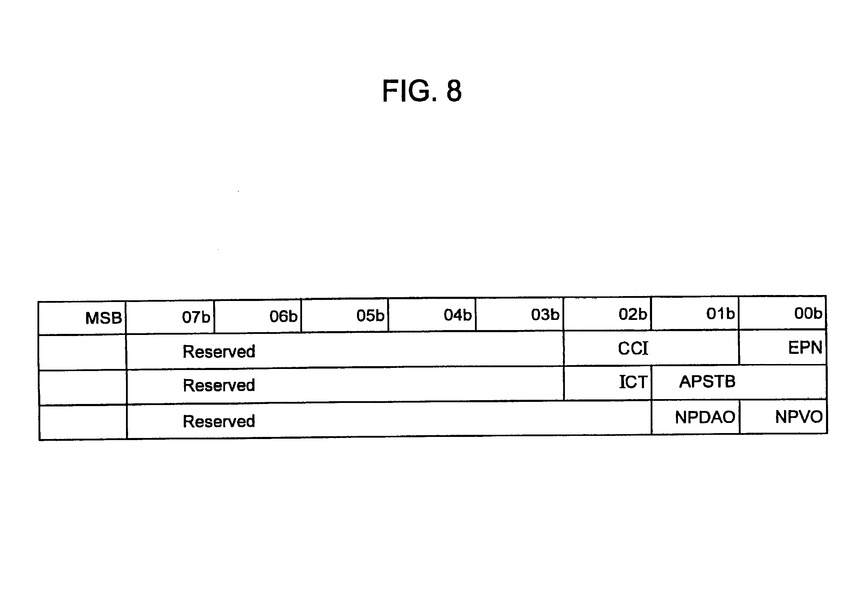

Referring to Figs. 6 and 8, the content data file stored in the content-data-file storage unit 120 and the license stored in the license storage unit 118 will be described. As shown in Fig. 6, the content data file to be stored includes a plurality of data packets 503 and a header 501 added thereto, which are stored in the content-data-file storage unit 120. As described above, the content data file stored in the content-data-file storage unit 120 includes control information packets having the same type of copy control information and content data packets in which the same type of copy control information is set.

The license stored in the license storage unit 118 includes a content ID 511, a playback list 512, and a playback parameter 513. In the playback list 512, information of a terminal capable of playing back the content data is set. For example, information indicating the type of the information processing device 100 can be set. In the playback parameter 513, control information for the content data is set. For example, copy control information or a flag indicating whether the content data is encrypted is set. As described above, one license is generated corresponding to one content data file, and the correspondence between the content data file and the license is given by the content ID.

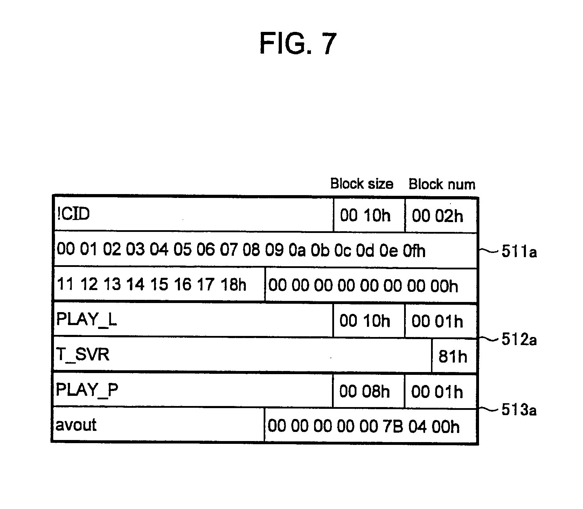

Fig. 7 shows a specific example of the license stored in the license storage unit 118. As shown in Fig. 7, the license includes a content ID category block 511a including the content ID, a playback list block 512a including information of a terminal capable of playing back the content data, and a playback parameter block 513a including copy control information. In the playback parameter block 513a, a parameter storing control information referred to as an "avout parameter" can be set. As shown in Fig. 7, the avout parameter has eight bytes, and the least significant three bytes are used for the control information for the content data. Fig. 8 shows a specific example of the avout parameter.

As shown in Fig. 8, the least significant three bytes of the avout parameter include 2-bit CCI, 1-bit encryption plus non-assertion (EPN), 1-bit image constraint token (ICT), 2-bit analog protection system trigger bit (APSTB), 1-bit prohibit non-protected digital audio output (NPDAO), and 1-bit prohibit non-protected video output (NPVO). These pieces of control information are written in the DTCP_descriptor in the above-described PMT.

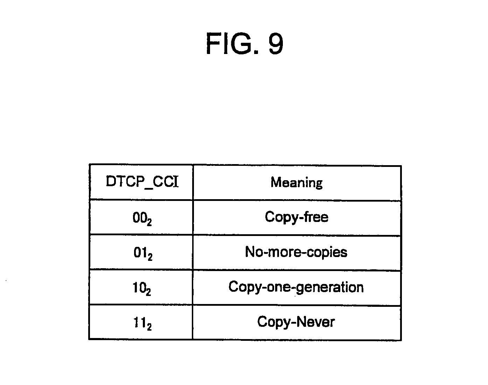

CCI is a flag indicating copy control information for the content data. In DTCP, copy control information is indicated by a 2-bit value shown in Fig. 9. As shown in Fig. 9, CCI in DTCP (DTCP_CCI) can be set to one of the following four types of copy control information: "00" indicating "copy free (copying is allowed)"; "01" indicating "copy-one-generation (copying is allowed only for one generation)"; "10" indicating "no-more-copies (copying is not allowed beyond this generation)"; and "00" indicating "copy-never (copying is prohibited)".

EPN is a flag indicating whether the content data is encrypted. ICT is a flag indicating whether the data packet is encrypted. APSTB is copy protection information developed by Macrovision Corporation.

NPDAO and NPVO are flags provided to cover risks in the case where a copy guard canceller or a scan converter for analog video or digital audio becomes a problem for a content distribution service provider in the future. For example, NPDAO is normally set to "0". To prohibit unprotected digital audio output (S/P DIF audio output or DTCP audiovisual output), NPDAO is set to "1". Similarly, NPVO is normally set to "0". To prohibit unprotected video output (analog output, raw DVI-D output, or DTCP audiovisual output), NPVO is set to "1".

The content data file and the license have been described as above. Referring back to Fig. 4, the transmitting unit 124 is a communication interface including, for example, a communication line, a communication circuit, or a communication device and has a function of obtaining the content data file stored in the content-data-file storage unit 120 and transmitting the data packets in a stream to another device. In order that the information processing device 100 transmits the content data to the PC 20 via the board 150b shown in Fig. 2, it is necessary to add the above-described EMI to the header of each data packet.

EMI is 2-bit copy control information representing CCI embedded in a data packet and can be distinguished without decrypting the DTCP-encrypted data packet. As described above, when a plurality of different types of copy control information is included in data packets, the encrypting/decrypting device 150 selects copy control information having the highest degree of copy restriction and transmits the selected copy control information to the information processing device 100. Therefore, CCI included in the license stored in the license storage unit 118 has, among the pieces of copy control information included in the data packets, the copy control information having the highest degree of copy restriction.

In the case where copy control information is set in the DTCP_descriptor, the transmitting unit 124 transmits the DTCP_descriptor along with the content data. The board 150b to which the content data and the DTCP_descriptor are transmitted sets, based on CCI and EPN included in the DTCP_descriptor, EMI to be added to the header of each content data packet.

Accordingly, the setting of the copy control information in the license apart from the content data enables easy setting of EMI without detecting the copy control information embedded in the content data. In transmission of the content data as a stream using DTCP, EMI can be set in each data packet in a shorter period of time than it would take to detect the copy control information embedded in the content data. As a result, the speed of transferring the content data can be increased.

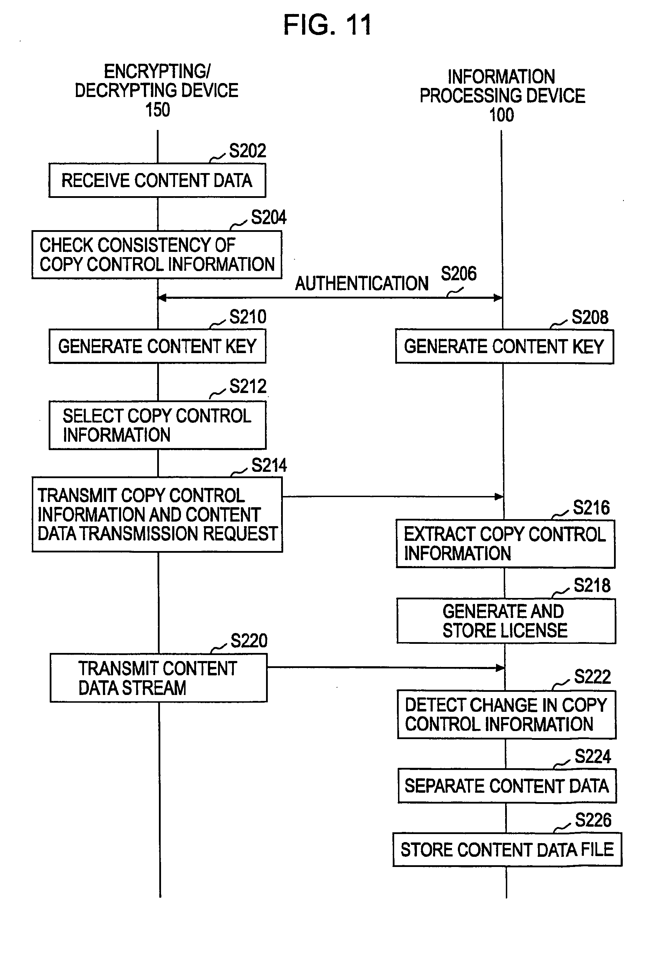

The functional configuration of the information processing device 100 has now been described. Referring now to Fig. 11, a process of transmitting content data from the encrypting/decrypting device 150 to the information processing device 100 will be described. Fig. 11 is a timing chart showing a process of transmitting content data from the encrypting/decrypting device 150 to the information processing device 100. At first, the encrypting/decrypting device 150 receives content data transmitted as a stream by an external device (S202).

The encrypting/decrypting device 150 checks the consistency of copy control information set in the content data received in step S202 (S204). As described above, when the content data is DTCP-encrypted and transmitted, EMI is added to each of the data packets transmitted as a stream, and CCI is embedded in each of the data packets. The encrypting/decrypting device 150 checks the consistency between EMI and CCI.

For example, in the case where EMI and CCI have the same type of copy control information, reception of the content data is allowed. In the case where EMI and CCI have different types of copy control information, when the degree of copy restriction of the copy control information of CCI is higher than that of EMI, reception of the content data may be allowed; and when the degree of copy restriction of the copy control information of CCI is lower than that of EMI, reception of the content data may be prohibited.

The encrypting/decrypting device 150 and the information processing device 100 perform mutual authentication (S206) and they each generate a content key (S208 and S210). As described above, the encrypting/decrypting device 150 and the information processing device 100 perform mutual authentication by transmitting/receiving a random number and, based on the authentication, generate a common content key.

The encrypting/decrypting device 150 selects one piece of copy control information from a plurality of types of copy control information included in the control information packets of the content data (S212). For example, when different types of copy control information are set in audio content and video content included in the data packets, the encrypting/decrypting device 150 selects copy control information having the highest degree of copy restriction.

The encrypting/decrypting device 150 transmits the copy control information selected in step S212 and a content data transmission request (S214). When the copy control information is set in the DTCP_descriptor, the DTCP_descriptor is transmitted in step S214. The information processing device 100 having received the DTCP_descriptor extracts the copy control information set in the DTCP_descriptor (S216). The information processing device 100 generates a license based on the copy control information and stores the generated license in the license storage unit 118 (S218).

The encrypting/decrypting device 150 transmits the content data as a stream of data packets to the information processing device 100 (S220). The information processing device 100 detects a change in the copy control information included in the control information packets (S222). When a change in the copy control information is detected in step S222, the information processing device 100 separates the content data transmitted as a stream (S224) and stores the separated content data in a content data file in the content-data-file storage unit 120 (S226).

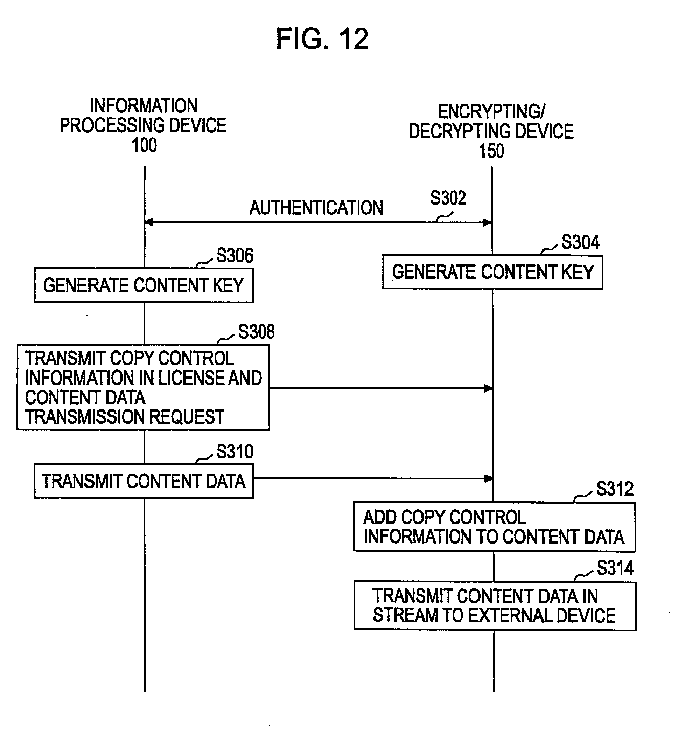

The process of transmitting the content data from the encrypting/decrypting device 150 to the information processing device 100 has now been described. Referring now to Fig. 12, a process of transmitting content data from the information processing device 100 to the encrypting/decrypting device 150 will be described. At first, the information processing device 100 and the encrypting/decrypting device 150 perform mutual authentication (S302) and they each generate a content key (S304 and S306). As described above, the information processing device 100 and the encrypting/decrypting device 150 perform mutual authentication by transmitting/receiving a random number and, based on the authentication, generate a common content key.

The information processing device 100 transmits copy control information set in the license stored in the license storage unit 118 and a content data transmission request to the encrypting/decrypting device 150 (S308). When the copy control information is set in the DTCP_descriptor, the information processing device 100 may transmit the DTCP_descriptor to the encrypting/decrypting device 150.

The information processing device 100 obtains, from the content-data-file storage unit 120, a content data file corresponding to the license transmitted in step S308 and transmits the content data file in units of data packets to the encrypting/decrypting device 150 (S310). As described above, since the content ID is set in the license and the content data file, the content data file having the same content ID as that of the license, which is transmitted in step S308, is transmitted in units of data packets.

The encrypting/decrypting device 150 adds copy control information to the content data transmitted by the information processing device 100 (S312) and transmits the content data as a stream to an external device (S314). As described above, when the encrypting/decrypting device 150 transmits the content data to an external device using DTCP, it is necessary to add EMI to each data packet of the content data. The encrypting/decrypting device 150 sets EMI based on the copy control information set in the license transmitted by the information processing device 100. When the DTCP_descriptor is transmitted in step S308 from the information processing device 100, the encrypting/decrypting device 150 sets EMI based on the copy control information set in the DTCP_descriptor. The process of transmitting the content data from the encrypting/decrypting device 150 to the information processing device 100 has been described as above.

According to the embodiment of the present invention, in the case where different types of copy control information are set in content data, the content data is separated and stored according to the type of copy control information, thereby enabling appropriate management of the content data in accordance with the copy control information. By managing the content data according to the type of copy control information, the content data can be easily moved or copied without analyzing the copy control information set in each data packet of the content data.

By setting the copy control information in the license corresponding to the separated content data, the content data can be easily and efficiently transferred using the copy control information set in the license, without detecting the copy control information embedded in the content data.

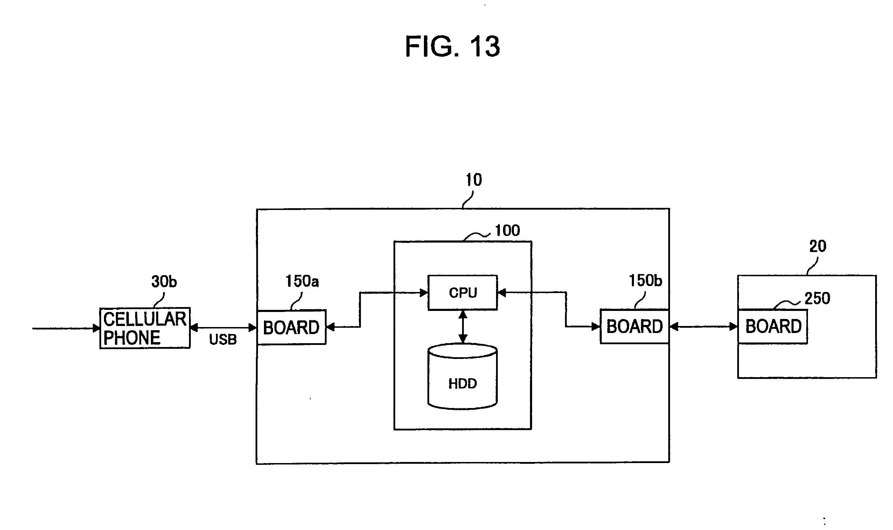

Although in this embodiment the external device such as a television receives broadcast waves of terrestrial digital broadcasting or the like and transmits the content data as a stream to the PC 10 via a connection interface such as the IEEE 1394 interface, the present invention is not limited thereto. For example, a mobile terminal such as a cellular phone may receive one segment broadcasting performed by terrestrial digital broadcasting. In the terrestrial digital broadcasting system, one channel is divided into 13 segments, and a group of several of these segments is used to transmit images, data, and sound. Among these segments, one segment is reserved for mobile broadcasting, which is referred to as one segment broadcasting. As shown in Fig. 13, in the case where one segment broadcasting waves are received by a mobile terminal such as a cellular phone, the mobile terminal and the PC according to the embodiment of the present invention may be connected by a universal serial bus (USB) network to transfer the content data. The content data is encoded in, for example, MPEG4 advanced video coding (AVC) or H.261-AVC.

While the preferred embodiment of the present invention has been described with reference to the accompanying drawings, the present invention is not limited thereto. It should be understood by those skilled in the art that a variety of modifications or changes may be made without departing from the scope of the appended claims and these modifications or changes also fall within the technical scope of the present invention.

## Claims

1. An information processing system comprising:
an information processing device; and
an encrypting/decrypting device for communicating with the information processing device and transmitting content data transmitted as a stream by an external device to the information processing device;
wherein the information processing device includes
copy-control-information extracting means for sequentially extracting pieces of copy control information included in the content data transmitted as the stream by the encrypting/decrypting device,
copy-control-information-change detecting means for detecting a change in the sequentially extracted copy control information,
content data separating means for separating, corresponding to the change in the copy control information, which is detected by the copy-control-information-change detecting means, the content data into a plurality of content data files and storing the content data files, and
license generating means for generating, based on the copy control information, a license corresponding to each of the separated content data files, and
wherein the encrypting/decrypting device includes
receiving means for receiving the content data including alternately arranged content data packets and control information packets corresponding to the content data packets, the content data packets and the control information packets being transmitted as the stream by the external device,
copy-control-information selecting means for selecting one piece of copy control information in accordance with the degree of copy restriction of a plurality of types of copy control information included in the control information packets, and
transmitting means for transmitting the content data packets and the copy control information selected by the copy-control-information selecting means as a stream to the information processing device.

2. An information processing device for communicating with an encrypting/decrypting device that encrypts/decrypts content data transmitted as a stream by an external device, the information processing device comprising:
copy-control-information extracting means for sequentially extracting pieces of copy control information included in content data transmitted as a stream by the encrypting/decrypting device;
copy-control-information-change detecting means for detecting a change in the sequentially extracted copy control information;
content data separating means for separating, corresponding to the change in the copy control information, which is detected by the copy-control-information-change detecting means, the content data into a plurality of content data files and storing the content data files; and
license generating means for generating, based on the copy control information, a license corresponding to each of the separated content data files.

3. The information processing device according to Claim 2, further comprising:
authentication means for performing mutual authentication with the encrypting/decrypting device to generate a common content key;
content key storage means for storing the content key; and
decrypting means for decrypting the content data using the content key, the content data being encrypted using the content key and transmitted as the stream by the encrypting/decrypting device.

4. The information processing device according to Claim 2, wherein the copy-control-information-change detecting means holds, among the pieces of copy control information sequentially extracted by the copy-control-information extracting means, one piece of copy control information as comparison base copy control information and compares newly extracted copy control information with the comparison base copy control information, thereby detecting a change in the copy control information.

5. The information processing device according to Claim 2, wherein
the content data transmitted as the stream includes content data packets and control information packets, which are alternately arranged, and
the copy-control-information extracting means extracts the copy control information included in the control information packets corresponding to the content data packets.

6. The information processing device according to Claim 2, wherein the content data separating means separates, corresponding to the change detected by the copy-control-information-change detecting means, the content data into the content data files including content data packets and control information packets and stores the content data files.

7. The information processing device according to Claim 6, wherein the encrypting/decrypting device selects, from a plurality of types of copy control information included in the control information packets, the copy control information having the highest degree of copy restriction and transmits the selected copy control information to the information processing device.

8. The information processing device according to Claim 2, further comprising:
license storage means for storing the license generated by the license generating means; and
transmitting means for transmitting the copy control information included in the license stored in the license storage means and the content data file corresponding to the license.

9. The information processing device according to Claim 8, wherein the encrypting/decrypting device transmits content data generated by adding the copy control information included in the license to the content data file transmitted by the transmitting means included in the information processing device as a stream to the external device.

10. An information processing method comprising the steps of:
sequentially extracting pieces of copy control information included in content data transmitted as a stream by an encrypting/decrypting device;
generating a license based on the extracted copy control information;
detecting a change in the sequentially extracted copy control information; and
separating, corresponding to the change in the copy control information, the content data and storing the separated content data in a content data file corresponding to the license.

11. A recording medium having recorded thereon a computer-readable program for allowing a computer to perform processing comprising the steps of:
sequentially extracting pieces of copy control information included in content data transmitted as a stream by an encrypting/decrypting device;
generating a license based on the extracted copy control information;
detecting a change in the sequentially extracted copy control information;
separating, corresponding to the change in the copy control information, the content data and storing the separated content data in a content data file corresponding to the license.

12. An encrypting/decrypting device for transmitting content data transmitted as a stream by an external device to an information processing device, the encrypting/decrypting device comprising:
receiving means for receiving the content data including alternately arranged content data packets and control information packets corresponding to the content data packets, the content data packets and the control information packets being transmitted as the stream by the external device;
copy-control-information selecting means for selecting one piece of copy control information in accordance with the degree of copy restriction of a plurality of types of copy control information included in the control information packets; and
transmitting means for transmitting the content data packets and the copy control information selected by the copy-control-information selecting means as a stream to the information processing device.

13. The encrypting/decrypting device according to Claim 12, further comprising:
decrypting means for decrypting the content data encrypted by the external device;
authentication means for performing mutual authentication with the information processing device to generate a common content key;
content key storage means for storing the content key; and
encrypting means for encrypting, using the content key, the content data transmitted as the stream by the external device.

14. The encrypting/decrypting device according to Claim 12, wherein the copy-control-information selecting means selects, from the plurality of types of copy control information included in the control information packets, the copy control information having the highest degree of copy restriction.

15. The encrypting/decrypting device according to Claim 12, wherein
the receiving means receives, from the information processing device, a content data file including at least one content data packet and at least one control information packet and copy control information included in a license corresponding to the content data file, and
the transmitting means transmits content data generated by adding the copy control information included in the license to the content data file corresponding to the license as a stream to the external device.

16. An encrypting/decrypting method comprising the steps of:
receiving content data including alternately arranged content data packets and control information packets corresponding to the content data packets, the content data packets and the control information packets being transmitted as a stream by an external device;
selecting one piece of copy control information in accordance with the degree of copy restriction of a plurality of types of copy control information included in the control information packets; and
transmitting the content data packets and the selected copy control information as a stream to an information processing device.

17. A recording medium having recorded thereon a computer-readable program for allowing a computer to perform processing comprising the steps of:
receiving content data including alternately arranged content data packets and control information packets corresponding to the content data packets, the content data packets and the control information packets being transmitted as a stream by an external device;
selecting one piece of copy control information in accordance with the degree of copy restriction of a plurality of types of copy control information included in the control information packets; and
transmitting the content data packets and the selected copy control information as a stream to an information processing device.

18. An information processing system comprising:
an information processing device; and
an encrypting/decrypting device for communicating with the information processing device and transmitting content data transmitted as a stream by an external device to the information processing device;
wherein the information processing device includes
a copy-control-information extracting unit operable to sequentially extract pieces of copy control information included in the content data transmitted as the stream by the encrypting/decrypting device,
a copy-control-information-change detecting unit operable to detect a change in the sequentially extracted copy control information,
a content data separating unit operable to separate, corresponding to the change in the copy control information, which is detected by the copy-control-information-change detecting unit, the content data into a plurality of content data files and store the content data files, and
a license generating unit operable to generate, based on the copy control information, a license corresponding to each of the separated content data files, and
wherein the encrypting/decrypting device includes
a receiving unit operable to receive the content data including alternately arranged content data packets and control information packets corresponding to the content data packets, the content data packets and the control information packets being transmitted as the stream by the external device,
a copy-control-information selecting unit operable to select one piece of copy control information in accordance with the degree of copy restriction of a plurality of types of copy control information included in the control information packets, and
a transmitting unit operable to transmit the content data packets and the copy control information selected by the copy-control-information selecting unit as a stream to the information processing device.

19. An information processing device for communicating with an encrypting/decrypting device that encrypts/decrypts content data transmitted as a stream by an external device, the information processing device comprising:
a copy-control-information extracting unit operable to sequentially extract pieces of copy control information included in content data transmitted as a stream by the encrypting/decrypting device;
a copy-control-information-change detecting unit operable to detect a change in the sequentially extracted copy control information;
a content data separating unit operable to select, corresponding to the change in the copy control information, which is detected by the copy-control-information-change detecting unit, the content data into a plurality of content data files and store the content data files; and
a license generating unit operable to generate a license corresponding to each of the separated content data files.

20. An encrypting/decrypting device for transmitting content data transmitted as a stream by an external device to an information processing device, the encrypting/decrypting device comprising:
a receiving unit operable to receive the content data including alternately arranged content data packets and control information packets corresponding to the content data packets, the content data packets and the control information packets being transmitted as the stream by the external device;
a copy-control-information selecting unit operable to select one piece of copy control information in accordance with the degree of copy restriction of a plurality of types of copy control information included in the control information packets; and
a transmitting unit operable to transmit the content data packets and the copy control information selected by the copy-control-information selecting unit as a stream to the information processing device.
